# EUROPEAN PATENT SPECIFICATION

(11) **EP 1 395 071 B1**
(45) Date of publication and mention of the grant of the patent: **27.12.2006**
(21) Application number: 02380183.0
(22) Date of filing: 23.08.2002
(51) Int. Cl.: H04Q 7/28

(54) **Call set-up method between mobile stations with presence check**
Verbindungsaufbauverfahren zwischen Mobilstationen mit Anwesenheitsüberprüfung
Procédé d'établissement d'appel entre des stations mobiles avec vérification de présence

(43) Date of publication of application: 03.03.2004
(73) Proprietor: Teltronic S.A.U., 50027 Zaragoza (ES)
(72) Inventor: Perez Fantova, Alfredo, 50057 Zaragoza (ES); Fontecha, Marta, 50057 Zaragoza (ES); Magallon, Oscar, c/o Teltronic S.A.U., 50027 Zaragoza (ES); Calderon, Alfredo, 50057 Zaragoza (ES)
(74) Representative: Primo de Rivera y Urquijo, Jose A.

(56) References cited:
- FR-A- 2 783 996
- US-A- 6 163 680
- "Terrestrial Trunked Radio (TETRA); Technical requirements for Direct Mode operation (DMO); Part 3: Mobile Station to Mobile Station (MS-MS) Air Interface (AI) protocol" ETSI ETS 300 396-3, March 1998 (1998-03), pages 1-159, XP002228940

## Description

### Object of the invention

The present invention refers to a call set-up method between mobile stations, with presence check, which provides essential novelty features and significant advantages with regard to the known and used means for the same purposes in the current state of the art.

More specifically, the invention proposes the development of a method for setting up a call in TETRA DMO mode (Terrestrial Trunked Radio in Direct Mode Operation), with the particularity that the presence check precisely constitutes its main feature. According to the invention, the method foresees that when a call is made with the use of a channel that is busy in that moment, the mobile station automatically switches to the next channel within its list of DMO (Direct Mode Operation) frequency, thereby successively hopping channels until obtaining one of the possible responses, be it in the sense of setting up the call or rejecting the call, and such that the mobile station which is calling is able to automatically return to its start channel when it is released.

The field of application of the invention is obviously comprised within the industrial sector dedicated to manufacturing radio communications devices.

### Background and Summary of the Invention

Skilled persons in the art know that when setting up a private call of the DMO MS-MS (Mobile Station-Mobile Station) type, the following two options can occur:
1) Set up without a presence check, the transmission thereby starts without explicit knowledge of the presence of some MS individual(s), and
2) Set up with a presence check, in which case a specific acknowledgement is searched for before beginning the transmission.

In the case of private calls (point to point), but not for group calls, it is possible to set-up a call by carrying out a presence check with the purpose of verifying the availability of the direct mode destination mobile station. In this case, the start of the call is performed in a manner similar to that of the set up without the presence check, but with the difference being that it requires a response from the mobile station which it is calling, confirming the acceptance of the call made from the mobile station which made it.

There are several documents in the state of the art which refer to operating modes which could be more or less similar to some of the features of the present invention, but which, considered in their entirety, basically differ from the current proposal. In this sense, reference could be made, for example, to the international patent application number PCT WO 97/29597, which discloses a presence check method of mobile stations which communicate by means of a direct mode channel, checking if the mobile station to be contacted is on a determined direct channel, and to do so, it sends a presence request message, including a determined identity, to a given second station, and with the reception of said message in the second mobile station, it checks the identity contained in the message with the identity of the second mobile station, such that if both identities are identical, an acknowledgement containing the identity of the second station is sent to the first mobile station, indicating the result of the presence request to the user of the first one. This document, basically intended for checking the emitter and receiver identities, in no case foresees changing the channel in the case of not obtaining a response.

Patent number US 6,163,680 refers to a system and method for setting up a two way radio communication, based on obtaining a list of optimal frequencies, at least for one of the stations, which is interchanged in the moment that communication is established, with the purpose of being able to jointly select the optimal connection frequency. In other words, it is a method and system intended for selecting the signal quality.

Patent number EP-0 756 432 discloses a channel selection device for a direct transmission system between mobile stations, which foresees the possibility of changing transmission channel based on the quality of said transmission. This change is carried out automatically, without the need of the users' intervention, but what the device disclosed in this document definitively intends is to provide the possibility of preventing noises in communications between mobile stations.

FR-A-2783996 describes a mobile stations presence check for data processing. The aim of this method is sending data information and finding other compatible mobile stations in order to send data. The process mainly consists in watching the channel and when the presence of a "compatible" mobile that is going to use the same data protocol is detected, this second mobile is informed and the data can therefore be sent.

US-A-6163680 describes a method for finding a free channel within, for example, the DMO-TETRA range, and therefore be able to maintain a communication taking into account that the channel must be free, that is to say, without any active communication, before being able to make a call in the free channel. It also describes a main mobile that maintains an updated channel list that can be consulted before starting the call, in such a way that it can be assured that the chosen frequency does not have a call in that moment.

The object of the invention differs from the proposals of the previous documents in the sense that, as previously explained, it is focused on setting up a call from one mobile station to another, without a prior, manual channel selection by the user. The call will be duly set up as long as the called mobile station is on a frequency channel belonging to the list of channels of the calling mobile station, and that frequency is free.

### Description of a Preferred Embodiment

Next, a more detailed description of the preferred embodiment of the method proposed by the present invention will be made. In this sense, the particularity of the presence check, which constitutes the basic feature of the method of the invention, is obtained with the development of said method, which starts, as previously explained, in a manner which is similar to those cases in which such presence check is not performed. In this case, the start message of the synchronization group now requires a response indicating the presence of the other mobile station in direct mode (MS-MS) which has been addressed as the receiver of the start attempt. This other mobile station, defined as "slave" for the transaction, responds with a connection message indicating that it wishes to receive the call (or where applicable, with a reject message if it desires to reject the call, said call would thereby finish in that moment); the "slave" station sends this message several times. With the reception of a connection message, the "master" station responds with a connection acknowledgement message. This is sent in a number of frames indicated by the descending frames meter, after which the transmission starts from the "master" station.

As can be seen, unlike the call set-up method without a presence check, the start of the traffic transmission is delayed by a number of frames, but furthermore, if the call is finally set up, the called user is certain that the "slave" station has accepted the call.

According to the invention, the correct sequence for setting up a call with a presence check is as follows:
- The calling mobile station, "master", checks if the current channel is free;
- If the channel is free, it sends the call set-up signal several times (a number of frames indicated by the descending frames meter);
- Said "master" station waits for a response for a maximum configurable period.

In the case that the channel is busy, or there is no response, or a reject signal is received, communication will not be established.

In the supposed case that there were a positive response, by means of a connected signal, communication will be established.

In setting up calls according to the TETRA Direct Mode Operation (DMO), known and used prior to the present patent application, when a user wishes to set up a private call, he should know beforehand what TETRA-DMO channel the called mobile station is on. In another known case, the call set-up signal must be sent only through the same channel on which the calling mobile is normally working. In this manner, unlike the method object of the present invention, the call could not be set up other than in the case that the called mobile station or terminal is on the same channel as the calling mobile station or terminal.

In consequence, the solution proposed by the present invention includes the following operating steps:
1. First, the calling mobile station starts the action by pushing the call button or by means of an equivalent triggering process, thereby sending a call set-up signal through the channel which said station is restricted to at that time (and which will be called "Start Channel"-"CH0").
2. In the case that no response is obtained, or the channel is busy (it is not necessary to determine if the channel is reserved, busy, ..., etc.), the calling mobile station automatically switches to the next channel belonging to its list of direct mode (DMO) frequency. The same process is repeated (check if the channel is free, send the call set-up signal and wait for response) on this new channel ("CH1").

The mobile will repeat this process until:
3. It receives a connected signal from the called mobile station or terminal, in which case the call is duly set up (sending a connected acknowledgement signal and entering in traffic mode), and both terminals are maintained on the new channel until the end of the call. Once the call has finished, the calling mobile returns to the "start channel" (CH0) again.
4. It receives a reject signal. In this case, the call is not set up, and the user receives a "rejected call" indication. Next, the calling mobile station or terminal returns to the "start channel" (CH0).
5. It has checked all the channels belonging to the list (CH0, CH1,..., CHn), and no response has been obtained; in this case, the calling mobile station or terminal returns again to the "start channel" (CH0), and it informs the user of the situation by means of a suitable indication (for example, "called user not found").
6. The user releases the call pulser, as he wishes to abandon the call. Then, the calling mobile terminal again returns to the "start channel" (CH0).

The invention also foresees that while the calling mobile terminal or station is looking for the called terminal, a message is displayed on the screen indicating to the user that the mobile is searching.

The method of the invention is valid for "normal priority calls" and "high priority calls", but it has the limitation of not being so for "preferential priority calls" or for "preferential priority emergency calls".

On the other hand, the method is recommendable for a limited number of channels, given that the search on each channel may take (in the least favorable case) up to 850 ms, as established in the following example.

### EXAMPLE

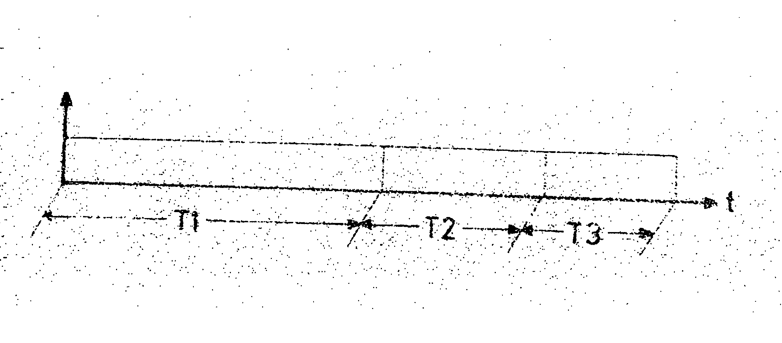

The calculation of an example of maximum waiting time in each channel will be carried out below, for which figure 1 of the attached drawings will be used, which shows a schematic graphic representation of a distribution of times, indicated by means of the references T1, T2, T3, this calculation example referring to the worst of the cases, in other words, when there is no response and the channel is free.

Each one of said references T1-T3 and which are shown in figure 1 indicate:
T1: This period refers to the fact that a mobile will have carried out the channel maintenance process for a duration of at least 8 frames prior to being able to invoke a quick call set-up. This is the minimum time the mobile must wait prior to determining the state of the radio channel as free.
T2: The time for sending the call set-up signal.
T3: The period of time during which the mobile is waiting for a response (waiting for a connected signal).

With the aforementioned in mind, the worst of cases obtains:
T1= 8 frames * 56.668 ms = 453.344
T2= (Maximum number of frames in which the message is sent) * 56.668 ms = 4* 56.668 ms = 226.672 ms.
T3= (Maximum number of frames containing the response of the DSB slave terminal) * 56.668 ms = DN210 * 56.668 ms = 3* 56.668 ms = 170.004 ms.

If the channel is not free, then the time on that channel will be less than T1.

If the channel is free, but there is no response (the called user is not on that frequency), the waiting time will be the maximum (T1+T2+T3)= 850 ms).

If there is a response, the time will be less than the total sum of T1+T2+T3, but greater than T1+T2.

The preceding has explained the method developed by the present invention for setting up a call between mobile stations with frequency check, including the different alternatives which may occur in the practice and behavior adopted by the calling terminal against them, and also showing the advantage provided by said method against other processes of the prior art, of its capacity to automatically change channel, without the user's intervention, in the case that the current channel is busy or there is no response.

It is not considered necessary to extend the content of this description so that a skilled person in the art may understand its scope and the advantages derived from the invention, as well as how to develop and put into practice the object thereof.

However, it must be understood that the invention has been described according to a preferred embodiment thereof, and that, therefore, it can be susceptible to changes and modifications without affecting the scope of the claimed invention as a result.

## Claims

1. Call set-up method between mobile stations, with presence check, with the calling mobile station or terminal previously checking if the current channel on which it is located is free, with the following steps:
a) sending a start signal or call set-up signal from the calling mobile terminal or station through the start channel, on which said station or terminal is restricted in the moment of starting the call, after pushing its corresponding call button or equivalent triggering process;
**characterized by**
b) in the case of not receiving a response from the called mobile terminal or station on that channel or in the case of the channel being busy, the mobile station or terminal trying to establish communication switches to the next channel within its list of direct mode frequency, automatically and without the user's intervention, the checking and channel hopping process being repeated as many times as necessary until receiving a response or until depleting the list of frequencies.

2. Call set-up method between mobile stations, with presence check according to claim 1, **characterized in that** the call set-up method is repeated until:
a) the mobile terminal or station which is making the call receives a connected signal from the called terminal, thus setting up the intended call, and both terminals being maintained on that channel until the call finalizes, after which the calling terminal returns to the start channel;
b) the terminal which is making the call receives a reject signal, in which case the call is not set up, said calling terminal returning to the start channel;
c) the terminal which is making the call has checked all the channels belonging to the list, and no call has been obtained, in which case the calling mobile terminal returns to the start channel and provides a corresponding indication to the user, and
d) the user releases the pulser of the terminal which is making the call in order to abandon it, in which case the calling terminal again returns to the start channel.

3. Call set-up method between mobile stations, with presence check according to the claim 1, **characterized in that** said mobile stations or terminals are in a TETRA (TErrestrial Trunked RAdio) communication system.

## Patentansprüche

1. Methode für das Herstellen einer Verbindung zwischen Mobilstationen mit Überprüfung der Anwesenheit, wobei die anrufende Mobilstation bzw. das anrufende Mobilterminal nachprüft, ob der aktuelle Kanal, auf dem sie/es liegt, frei ist, und wobei die Methode folgende Schritte umfasst:
a) Senden eines Startsignals bzw. Signal für das Herstellen einer Verbindung vom anrufenden Mobilterminal bzw. der anrufenden Mobilstation, über den Startkanal, auf den die genannte Station bzw. das genannte Terminal zum Zeitpunkt des Beginns des Anrufs beschränkt ist, nach Drücken des entsprechenden Rufknopfs oder nach einem gleichwertigen Aktivierungsvorgang;
**dadurch gekennzeichnet, dass**
b) im Falle, dass keine Antwort von dem angerufenen Mobilterminal bzw. der angerufenen Mobilstation kommt, oder im Falle, dass der Kanal besetzt ist, die Mobilstation bzw. das Mobilterminal, das die Verbindung herzustellen versucht, automatisch und ohne Intervention des Benutzers zum nächsten Kanal auf seiner Frequenzliste auf Direktmodus weitergeschaltet wird, wobei der Vorgang der Überprüfung und das Weiterschalten zum nächsten Kanal so lange wiederholt wird, wie dies notwendig ist, bis eine Antwort erhalten wird oder die Frequenzliste erschöpft ist.

2. Methode für das Herstellen einer Verbindung zwischen Mobilstationen mit Überprüfung der Anwesenheit nach Anspruch 1, **dadurch gekennzeichnet**, das die Methode zum Herstellen der Verbindung wiederholt wird, bis:
a) das anrufende Mobilterminal oder die anrufende Mobilstation, ein Verbindungssignal vom angerufenen Terminal erhält, wodurch die gewünschte Verbindung hergestellt wird, wobei beide Terminal auf diesem Kanal gehalten werden, bis die Verbindung beendet wird, wonach das anrufende Terminal zum ursprünglichen Kanal zurückkehrt;
b) das anrufende Terminal eines Unterdrückungssignal erhält, wobei keine Verbindung in diesem Fall hergestellt wird und das genannte anrufende Terminal zum ursprünglichen Kanal zurückkehrt;
c) das anrufende Terminal alle zur Liste gehörigen Kanäle überprüft hat und keine Verbindung hergestellt werden konnte, wobei der anrufende Mobilterminal in diesem Fall zum ursprünglichen Kanal zurückkehrt und eine entsprechende Anzeige für den Benutzer ausgibt, und
d) der Benutzer den Knopf des anrufenden Terminals freigibt, um den Anruf aufzugeben, wobei das anrufende Terminal in diesem Fall erneut zum ursprünglichen Kanal zurückkehrt.

3. Methode für das Herstellen einer Verbindung zwischen Mobilstationen mit Überprüfung der Anwesenheit nach Anspruch 1, **dadurch gekennzeichnet, dass** die genannten Mobilstationen bzw. - terminals zu einem TETRA-Kommunikationssystem (Terrestrial Trunked Radio, digitaler Bündelfunk) gehören.

## Revendications

1. Procédé d'établissement d'appel entre des stations mobiles, avec vérification de présence, la station ou le terminal mobile qui réalise l'appel vérifiant préalablement si le canal actuel sur lequel elle est située est libre, avec les étapes suivantes:
a) envoyer un signal d'initiation ou signal d'établissement d'appel depuis le terminal ou la station mobile qui réalise l'appel à travers le canal d'initiation sur lequel est limitée ladite station ou terminal lors du commencement de l'appel, après avoir poussé son bouton d'appel correspondant ou procédé d'activation équivalent;
**caractérisé en ce que**
b) en cas de non-réception d'une réponse depuis le terminal ou la station mobile à laquelle on appelle dans ce canal ou dans le cas où le canal serait occupé, la station ou le terminal mobile qui essaie d'établire la communication est commutée au canal suivant dans sa liste de fréquences en mode directe, automatiquement et sans l'intervention de l'utilisateur, le procédé de vérification et de saut de canal se répétant autant de fois que cela soit nécessaire jusqu'à la réception d'une réponse ou jusqu'à l'épuisement de la liste de fréquences.

2. Procédé d'établissement d'appel entre des stations mobiles, avec vérification de présence, selon la revendication 1, **caractérisé en ce que** le procédé d'établissement d'appel se répète jusqu'à ce que:
a) le terminal ou la station mobile qui est en train de réaliser l'appel reçoive un signal de connexion depuis le terminal à laquelle on appelle, en établissant ainsi l'appel souhaité, et les deux terminaux se maintenant dans ce canal jusqu'à ce que l'appel se termine, après quoi le terminal qui réalise l'appel retournera au canal initial;
b) le terminal qui est en train de réaliser l'appel reçoive un signal de refus, dans lequel cas l'appel n'est pas établi, ledit terminal qui réalise l'appel retournant au canal initial;
c) le terminal qui est en train de réaliser l'appel ait vérifié tous les canaux appartenant à la liste, et qu'il n'ait pas obtenu aucun appel, dans lequel cas le terminal mobile qui réalise l'appel retourne au canal initial et fournit une indication correspondante à l'utilisateur, et
d) l'utilisateur libère le bouton du terminal qui est en train de réaliser l'appel pour l'abandonner, dans lequel cas le terminal qui réalise l'appel retourne à nouveau au canal initial.

3. Procédé d'établissement d'appel entre des stations mobiles, avec vérification de présence, selon la revendication 1, **caractérisé en ce que** lesdites stations mobiles ou terminaux sont dans un système de communication TETRA (Terrestrial Trunked Radio, radiocommunications terrestres de groupe fermé).
